# EUROPEAN PATENT SPECIFICATION

(11) **EP 0 791 993 B1**
(45) Date of publication and mention of the grant of the patent: **29.05.2002**
(21) Application number: 96922219.9
(22) Date of filing: 01.07.1996
(51) Int. Cl.: H02G 1/12

(54) **TOOL FOR STRIPPING COVER OF ELECTRIC WIRE**
ENTMANTELUNGSWERKZEUG FÜR ELEKTRISCHER DRAHT
OUTIL A DENUDER LES FILS ELECTRIQUES

(30) Priority: 09.08.1995 JP 20323295
(43) Date of publication of application: 27.08.1997
(73) Proprietor: Muromoto Tekko K.K., Hirakata-shi, Osaka 573 (JP)
(72) Inventor: MUROMOTO, Osamu Muromoto Tekko Kabushiki Kaisha, Osaka 573 (JP)
(74) Representative: Nicholls, Michael John
(86) International application number: PCT/JP96/01848
(87) International publication number: WO 97/06588

(56) References cited:
- JP-U- 2 094 410
- JP-U- 57 034 109
- JP-U- 58 196 516
- JP-U- 61 153 417
- US-A- 4 366 730
- US-A- 4 660 273

## Description

The present invention relates to an electric wire cover peeling tool for peeling an insulation cover covering an electric wire.

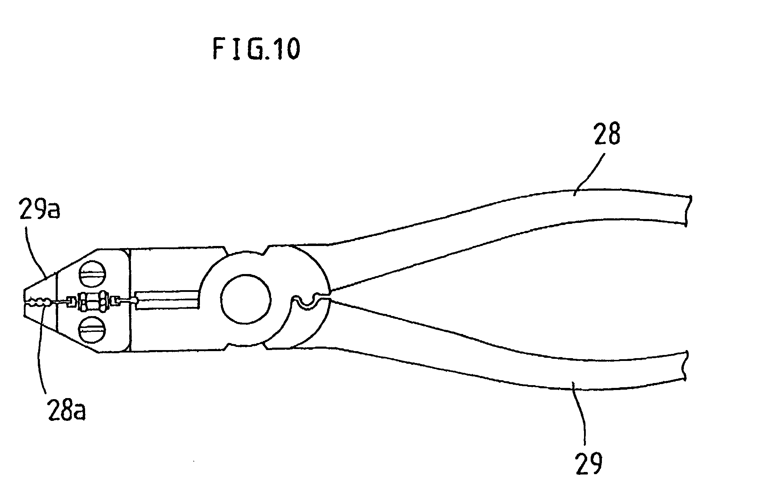

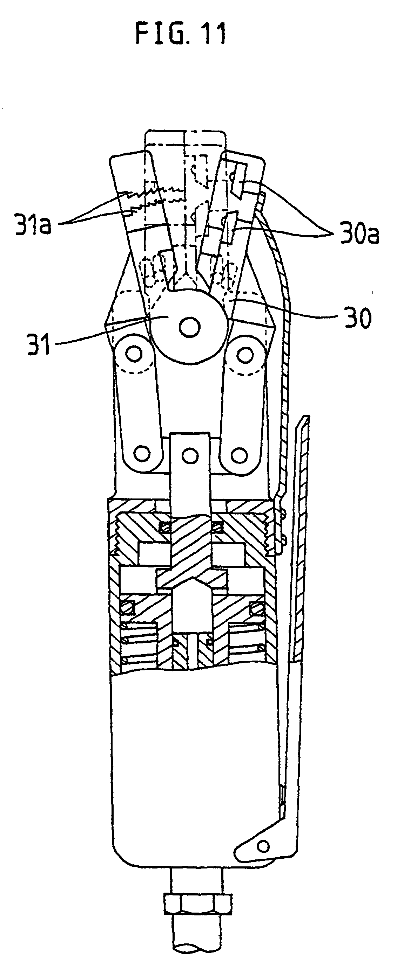

As this kind of electric wire cover peeling tool, the following tools have been conventionally used. For example, a tool illustrated in Fig. 10 of the accompanying drawings has semicircular blades 28a and 29a respectively at tips of a pair of handles 28 and 29 rotatably supported in an X shape, and holding an electric wire (not shown in the Figure) between the upper and lower blades 28a and 29a so that a cover of a tip of the electric wire. may be pulled out to an end. Another, from Japanese TOKKYO KOKAI S52-18910, illustrated in Fig. 11 is for holding an electric wire between a pair of movable rods 30 and 31 respectively arranging a cutter 30a on one rod and a handle 31a on the other rod to make the movable rods 30 and 31 open pivotally under this condition, thereby pushing the electric wire cover positioned outside of the cutter 30a (i.e., the right side in Figure) out outwardly.

Among the mentioned-above conventional electric wire cover peeling tools, the one illustrated in Fig. 10 requires extracting the electric cover from an end while handling the handles, thereby causing problems wherein the operation is difficult, there is a fear of damaging the core wire by excess force and the operation efficiency is bad.

Moreover, in the one illustrated in Fig. 11, an electric wire is bent at the time while opening pivotally the movable rods, whereby an insulation cover cannot be smoothly pulled off with the result that there is a fear of damaging the core wire in the operation. Moreover, the operation requires power source of air compressor or the like thereby having problems of increasing equipment cost and being inferior in usability because the body of the tool is connected to a power source via an air hose or the like.

US-A-4,660,273 discloses a wire stripping tool on which the precharacterising portion of claim 1 is based. It comprises two L-shaped parts pivotally connected together with one limb of each L forming grips and the other limb a jaw. The tips of the jaws have portions for clamping a wire to be stripped and a V-shaped member having opposing blades on the ends of its limbs is held between the jaws for cutting through the insulating sheath of the wire on initial squeezing of the grips and relative rotation of the jaws. The V-shaped member is so-linked to the L-shaped parts that further squeezing of the. grips moves it backwards to pull the insulation over the end of the wire.

US-A-4,336,730 discloses a wire tool which is operationally similar to that above.

The present invention is directed to solving problems in these conventional electric wire cover peeling tools.

According to the present invention, there is provided an electric wire cover peeling tool for peeling an insulation cover of an electric wire comprising:
a body having a clamp receiver at the front side and a grip protrusively formed at the back and lower side thereof,
a clamp arm rotatably connected to the body so as to be moveable towards and away from the clamp receiver,
an operation lever rotatably connected to the body so as to be movable towards and away from the grip,
a first slider arranged on the clamp receiver slidably in a longitudinal direction,
a second slider arranged on the clamp arm slidably in a longitudinal direction,
a link unit arranged respectively between the operation lever and the second slider for propagating movement of the operation lever to the second slider; and
a spring urging the second slider to the upper side of a tip of the body via the link unit,
wherein, at the tip of respectively the clamp receiver and the clamp arm, protruding holding portions for holding an electric wire are arranged opposed to each other, and at the tips of the first and second sliders inwardly protruding blades for peeling the cover of the electric wire are arranged opposed to each other,
rotation of the operation lever causing rotation of the clamp arm relative to the clamp receiver and sliding of both sliders via the link unit, thereby performing successively pressure-cutting of the electric wire cover with the blades and extraction of the cut electric cover from the core wire; characterised in that:
   the link unit comprises a first link member mounted with respective ends pivotally connected to the operation lever and the clamp arm and a second link member mounted with respective ends pivotally connected to the first link member and the second slider;
   and in that the sliders are mutually engagable by engaging sections provided at their rear sections, respectively, such that when engaged they are movable towards and away from each other but are not displacable relative to each other in the sliding direction.

In the electric wire cover peeling tool according to the present invention, the holding portions hold an electric wire before the blades bite into the electric wire cover and move horizontally to peel the cover off whereby there is no fear of damaging the core wire owing to a smooth operation. Furthermore, the operation is successively performed by only holding the operation lever whereby the operation is easy without requiring skill, it reduces a burden of the operation and it makes the operation efficiency increase.

The invention will be further described by way of example with reference to the accompanying drawings, in which:-
Fig. 1 is a side view showing an electric wire cover peeling tool according to the present invention.
Fig. 2 is a sectional view along line A-A in Fig. 1.
Fig. 3 is a plan view of the peeling tool illustrated in Fig. 1.
Fig. 4 is a longitudinal sectional view of the peeling tool illustrated in Fig. 1.
Fig. 5 is a longitudinal sectional view of a state in the middle of an operation of the peeling tool illustrated in Fig. 1.
Fig. 6 is a longitudinal sectional view of a state in completion of the operation of the peeling tool illustrated in Fig. 1.
Fig. 7 is a front view of state prior to the operation of blades employed for the electric wire cover peeling tool according to the present invention.
Fig. 8 is a front view of the operating state of the blades employed for the peeling tool for electric wire cover according to the present invention.
Fig. 9 is a side view of the operating state of the blades employed for the electric wire cover peeling tool according to the present invention.
Fig. 10 is a schematic side view of a conventional embodiment.
Fig. 11 is a partially omitted side view of another conventional embodiment.

Referring now to the drawings, an embodiment of the invention is described in detail below.

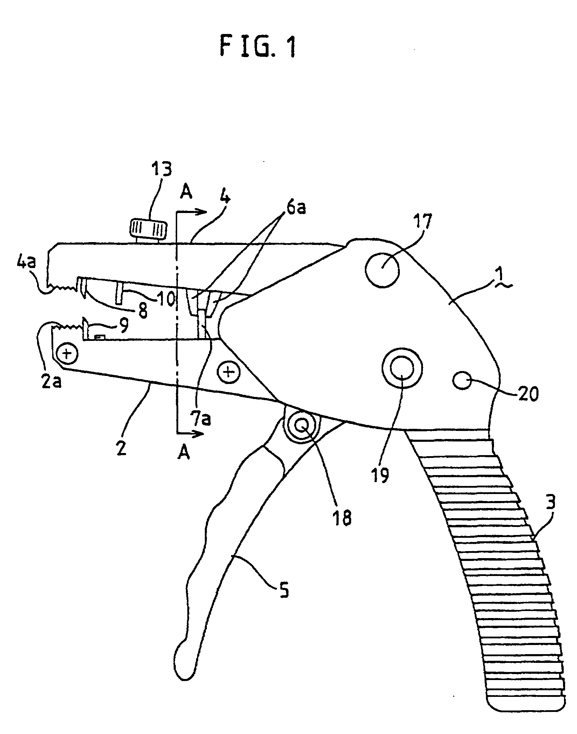

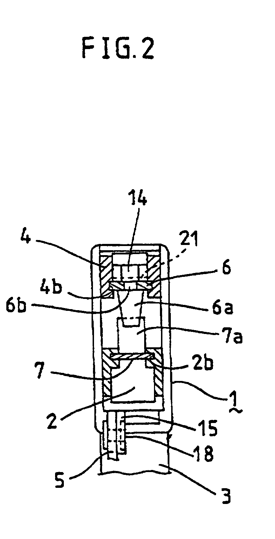

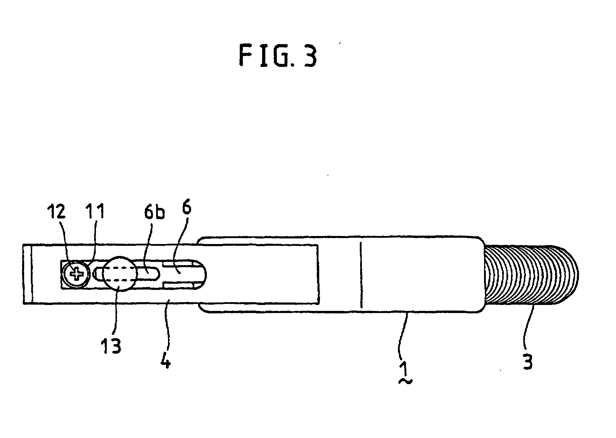

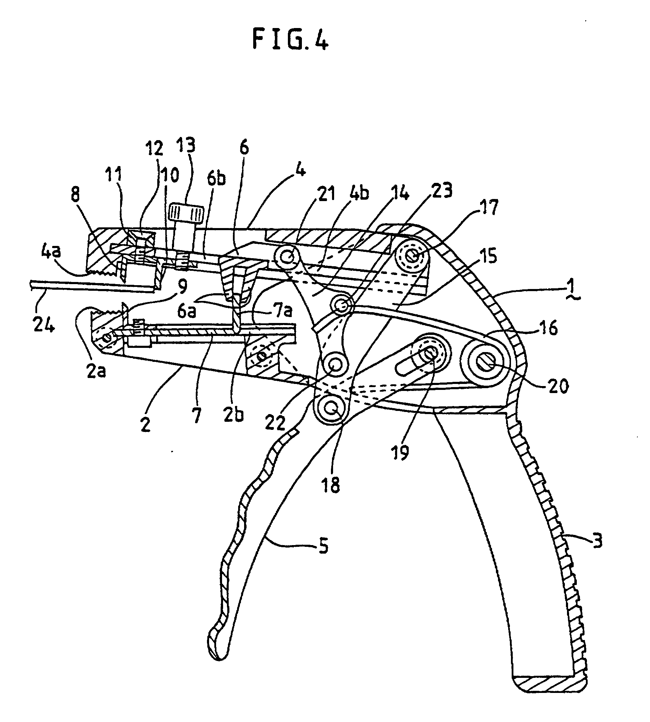

Fig. 1 is a side view showing the electric wire cover peeling tool according to the present invention. Fig. 2 is a sectional view along line A-A in Fig. 1. Fig. 3 is a plan view of the peeling tool illustrated in Fig. 1. Fig. 4 is a longitudinal sectional view of the peeling tool illustrated in Fig. 1. As shown in Figures, the peeling tool includes a body 1 protrusively formed to have a jaw-like clamp receiver 2 to the front side thereof (i.e., the left side in Fig. 1) and a grip 3 to the back (i.e., the right side in Fig. 1) lower side thereof, wherein a clamp arm 4 is rotatably arranged on the body 1 by a shaft 17 so as to be movable towards and away from the clamp receiver 2, and an operation lever 5 is rotatably arranged on the body 1 by a shaft 19 so as to be movable towards and away from the grip 3.

The clamp arm 4 protrusively provided with a downward facing holding portion 4a at a tip thereof is engaged with an edge of a second longitudinal slider 6 (the right and left directions in Fig. 4), by means of a guide groove 4b for guiding slidably the slider 6.

The clamp receiver 2 protrusively provided with a holding portion 2a opposite to the holding portion 4a positioned at the upper side of the tip thereof is engaged with an edge of a first longitudinal slider 7 (i.e., the right and left directions in Fig. 4), by means of including a guide groove 2b for guiding slidably the slider 7.

Furthermore, the sliders 6 and 7 are engagable with each other by engagement portions 6a and 7a positioned at respective back portions thereof so as to be movable, when engaged, towards and away from each other, but relatively immovable in the sliding direction.

A link unit includes link members 14 and 15. In the link member 15, an end is connected to the body 1 by the shaft 17 of the clamp arm 4 and the other end is connected to the operation lever 5 by a shaft 18. In the other link member 14, one end is connected to the second slider 6 by a shaft 21 and the other end is connected to the link member 15 by a shaft 22. In the middle of the link member 14, a pin 23 is arranged, the pin 23 is urged to the front upper side by a kick spring 16 as an urging means arranged at the back portion of the body 1. An axle 20 is disposed for fixing a center of the kick spring 16.

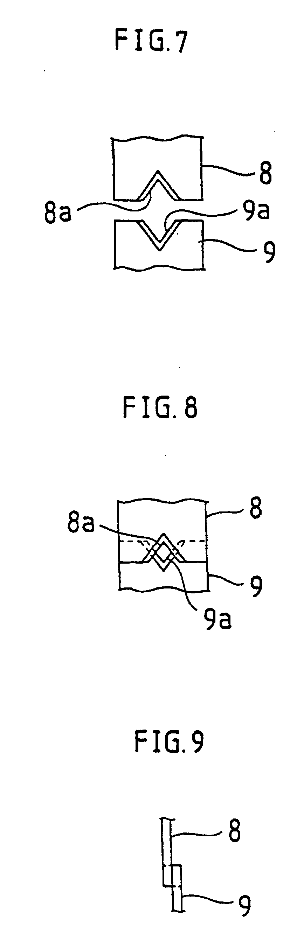

The sliders 6 and 7 are provided with blades 8 and 9 for peeling the electric wire cover, which protrude inwardly at respective tips thereof. As shown in Fig. 7 to Fig. 9, the blades 8 and 9 respectively include angular notches 8a and 9a at each edge of the blades 8 and 9. In cutting the electric wire cover as mentioned below, the tips thereof overlap each other.

A stopper 10 is arranged on the second slider 6 by a fixing screw 13 so as to be position adjustable. A brake collar 11 is arranged on the second slider 6 by a screw 12 so as to prevent the slider 6 from sliding. A slide bore 6b is arranged for controlling a fixing position of the stopper 10.

Next, the operation of the electric wire cover peeling tool having the above structure is described below.

First, the fixing screw 13 is unfastened and the stopper 10 is moved along the slide bore 6b, thereby deciding the length of electric wire cover to peeled, (i.e., the length equal to a distance between the blades 8 and the stopper 10) and then the stopper 10 is fixed in position. Next, the stopper 10 contacts an end of an electric wire 24 by inserting the electric wire 24 from the top of the peeling tool (i.e., the left side in Fig. 4), while holding the grip 3 and the operation lever 5 in this condition. Then, the operation lever 5, is rotated counterclockwise around the shaft 19, whereby the link member 15 connected to the operation lever 5 is rotated counterclockwise around the shaft 17. As a result, via the link member 14 connected to the link member 15 and the second slider 6 connected to the link member 14, the clamp lever 4 is rotated towards the clamp receiver 2, around the shaft 17. During this time, although the second slider 6 is slidably arranged on the clamp arm 4, the second slider 6 is urged forward by the kick spring 16 via the link member 14 and the brake collar 11 contacts an inner surface of the clamp arm 4 with the result that it does not slide.

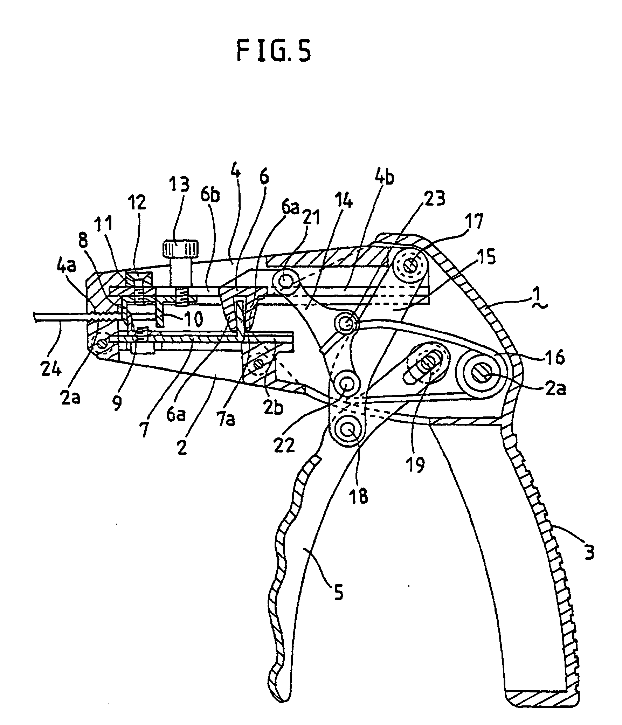

Therefore, as shown in Fig. 5, the electric wire 24 is held between holding portions 4a and 2a. At the same time, as shown in Fig. 8 and Fig. 9, in the blades 8 and 9 respectively arranged on the upper and lower sliders 6 and 7, the tips thereof are overlapped to contact each other and the angular notches 8a and 9a bite into the cover surrounding the electric wire 24, thereby cutting the cover for separation.

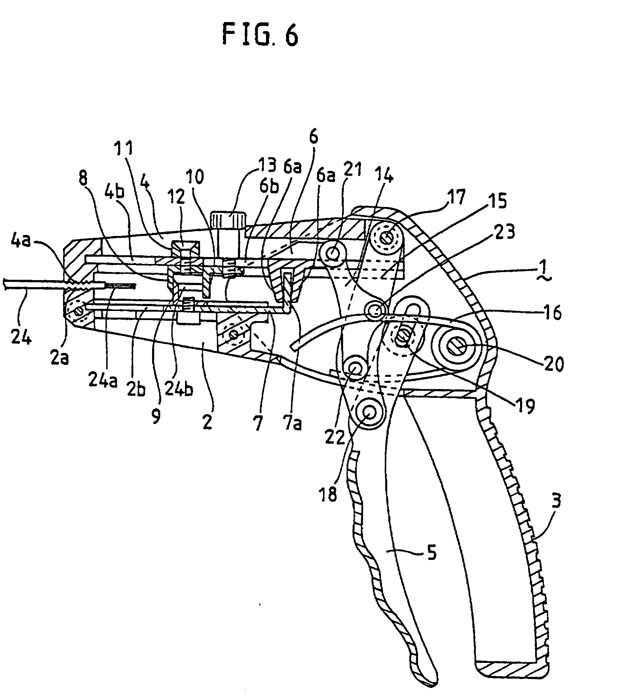

When, further to this condition, the operation lever 5 is rotated towards the grip 3, the clamp arm 4 cannot be rotated furthemore, whereby the second slider 6 connected to the operation lever 5 via the link members 15 and 14 overcomes urging force of the kick spring 16 and sliding resistance of the brake collar 11 to move to the right side along the guide groove 4b of the clamp arm 4. In this time, the first slider 7 including engagement portion 7a engaged with the engagement portion 6a of the second slider 6 is synchronously driven with the slider 6 along the guide groove 2b. Therefore, the blades 8 and 9 arranged at tips of the both sliders 6 and 7 bite into a cover 24b of the electric wire 24, which is stripped of a core wire 24a, as shown in Fig. 6.

After the electric wire cover 24b is peeled in this way and the operation is completed, the holding force of the operation lever 5 is released, whereby the link member 14 urged by the kick spring 16 is pushed up to the upper side and pushed out to the left side with the result that the second slider 6 connected to the link member 14 and the first slider 7 engaged with the slider 6 moves to the left side, the clamp arm 4 is rotated around the shaft 17, both sliders 6 and 7 and clamp arm 4 return to a state prior to starting the operation, as shown in Fig. 1 to Fig. 4.

Though the above embodiment illustrates that the upper and lower blades 8 and 9 are respectively provided with the angular notches 8a and 9a, the notches 8a and 9a may be any other shape such as semicircular and oval for biting into the cover 24b of the electric wire 24. Furthermore, several notches 8a and 9a having different sizes according to diameter of the electric wire 24 or the like may be arranged on the surface of each blade in a row.

## Claims

1. An electric wire cover peeling tool for peeling an insulation cover of an electric wire comprising:
a body (1) having a clamp receiver (2) at the front side and a grip (3) protrusively formed at the back and lower side thereof,
a clamp arm (4) rotatably connected to the body (1) so as to be moveable towards and away from the clamp receiver (2),
an operation lever (5) rotatably connected to the body (1) so as to be movable towards and away from the grip (3),
a first slider (7) arranged on the clamp receiver (2) slidably in a longitudinal direction,
a second slider (6) arranged on the clamp arm (4) slidably in a longitudinal direction,
a link unit arranged respectively between the operation lever (5) and the second slider (6) for propagating movement of the operation lever (5) to the second slider (6); and
a spring (16) urging the second slider (6) to the upper side of a tip of the body (1) via the link unit,
wherein, at the tip of respectively the clamp receiver (2) and the clamp arm (4), protruding holding portions (2a, 4a) for holding an electric wire are arranged opposed to each other, and at the tips of the first and second sliders (6, 7), inwardly protruding blades (8, 9) for peeling the cover of the electric wire are arranged opposed to each other,
rotation of the operation lever (5) causing rotation of the clamp arm (4) relative to the clamp receiver (2) and sliding of both sliders (6, 7) via the link unit, thereby performing successively pressure-cutting of the electric wire cover with the blades (8, 9) and extraction of the cut electric cover from the core wire; **characterised in that**:
the link unit comprises a first link member (15) mounted with respective ends pivotally connected to the operation lever (5) and the clamp arm (4) and a second link member (14) mounted with respective ends pivotally connected to the first link member (15) and the second slider (6);
and **in that** the sliders (6, 7) are mutually engagable by engaging sections (6a, 7a) provided at their rear sections, respectively, such that when engaged they are movable towards and away from each other but are not displacable relative to each other in the sliding direction.

2. An electric wire cover peeling tool according to claim 1, wherein the second slider (6) is provided with a fixed or movable stopper (10) for contacting the tip of an inserted electric wire thereby determining the length of the electric wire cover which is peeled.

3. An electric wire cover peeling tool according to claim 1 or 2, wherein each of the blades (8, 9) is provided with a row of notches of different sizes.

## Patentansprüche

1. Werkzeug zum Entfernen einer Abdeckung eines elektrischen Drahtes, um eine isolierende Abdeckung eines elektrischen Drahtes zu entfernen, das aufweist:
- einen Körper (1), der einen Klemmaufnehmer (2) an der Vorderseite und einen vorspringend geformten Griff (3) an der Rück- und Unterseite davon hat,
- einen Klemmarm (4), der drehbar mit dem Körper (1) verbunden ist, so dass er auf den Klemmaufnehmer (2) zu und von diesem weg beweglich ist,
- einen Betätigungshebel (5), der drehbar mit dem Körper (1) verbunden ist, so dass er auf den Griff (3) zu und von diesem weg beweglich ist,
- einen ersten Schieber (7), der an dem Klemmaufnehmer (2) in eine Längsrichtung verschieblich angeordnet ist,
- einen zweiten Schieber (6), der an dem Klemmarm (4) in eine Längsrichtung verschieblich angeordnet ist,
- eine Verbindungseinheit, die jeweils zwischen dem Betätigungshebel (5) und dem zweiten Schieber (6) angeordnet ist, um eine Bewegung des Betätigungshebels (5) auf den zweiten Schieber (6) zu übertragen, und
- eine Feder (16), die den zweiten Schieber (6) über die Verbindungseinheit zu der Oberseite eines Endes des Körpers (1) drängt,
wobei, an dem Ende jeweils des Klemmaufnehmers (2) und des Klemmarmes (4), hervorstehende Halteabschnitte (2a, 4a) einander gegenüberstehend angeordnet sind, um einen elektrischen Draht zu halten, und an den Enden des ersten und zweiten Schiebers (6, 7) einwärts hervorstehende Blätter (8, 9) einander gegenüber angeordnet sind, um die Abdeckung des elektrischen Drahtes zu entfernen,
und wobei Drehung des Betätigungshebels (5) Drehung des Klemmarmes (4) relativ zu dem Klemmaufnehmer (2) und Verschiebung beider Schieber (6, 7) über die Verbindungseinheit verursacht, wodurch sukzessive Druck-Schneiden der Abdeckung des elektrischen Drahtes mit den Blättern (8, 9) und Extraktion der geschnittenen elektrischen Abdeckung von dem Kerndraht durchgeführt wird,
**dadurch gekennzeichnet,**
**dass** die Verbindungseinheit ein erstes Verbindungsglied (15) aufweist, das montiert mit jeweiligen Enden drehbar mit dem Betätigungshebel (5) und dem Klemmarm (4) verbunden ist, und ein zweites Verbindungsglied (14), das montiert mit jeweiligen Enden drehbar mit dem ersten Verbindungsglied (15) und dem zweiten Schieber (6) verbunden ist,
und **dass** die Schieber (6, 7) jeweils durch Wirkbereiche (6a, 7a), die an ihren rückwärtigen Abschnitten angeordnet sind, miteinander zusammenwirken können, so dass sie, wenn sie miteinander zusammenwirken, aufeinander zu und voneinander weg beweglich sind, jedoch nicht relativ zueinander in der Schieberichtung verschieblich sind.

2. Werkzeug zum Entfernen einer Abdeckung eines elektrischen Drahtes nach Anspruch 1, wobei der zweite Schieber (6) mit einem festen oder beweglichen Stoppelement (10) versehen ist, zum Kontaktieren des Endes eines eingeführten elektrischen Drahtes und zum dadurch Festlegen der Länge der Abdeckung des elektrischen Drahtes, die entfernt wird.

3. Werkzeug zum Entfernen einer Abdeckung eines elektrischen Drahtes nach Anspruch 1 oder 2, wobei jedes der Blätter (8, 9) mit einer Reihe von Kerben unterschiedlicher Größe versehen ist.

## Revendications

1. Outil à dénuder les fils électriques destiné à enlever un revêtement isolant d'un fil électrique, comprenant :
un corps (1) comportant un récepteur de serrage (2) du côté avant et une poignée (3) formée en saillie à son côté arrière et inférieur,
un bras de serrage (4) connecté à rotation au corps (1) de manière à pouvoir se rapprocher et s'éloigner du récepteur de serrage (2),
un levier de commande (5) connecté à rotation au corps (1) de manière à pouvoir se rapprocher et s'éloigner de la poignée (3),
un premier coulisseau (7) disposé sur le récepteur de serrage (2) à coulissement dans une direction longitudinale,
un second coulisseau (6) disposé sur le bras de serrage (4) à coulissement dans une direction longitudinale,
une unité de liaison disposée respectivement entre le levier de commande (5) et le second coulisseau (6) pour transmettre un mouvement du levier de commande (5) au second coulisseau (6) ; et
un ressort (16) poussant le second coulisseau (6) vers le côté supérieur d'un bout du corps (1) via l'unité de liaison,
dans lequel, au bout du récepteur de serrage (2) et du bras de serrage (4), respectivement, des parties de maintien en saillie (2a, 4a) destinées à tenir un fil électrique sont disposées à l'opposé l'une de l'autre, et aux bouts des premier et second coulisseaux (6, 7), des lames (8, 9) faisant saillie vers l'intérieur destinées à enlever le revêtement du fil électrique sont disposées à l'opposé l'une de l'autre,
une rotation du levier de commande (5) provoquant la rotation du bras de serrage (4) par rapport au récepteur de serrage (2) et le coulissement des deux coulisseaux (6, 7) via l'unité de liaison, effectuant ainsi successivement le découpage par pression du revêtement du fil électrique par les lames (8, 9) et l'extraction du revêtement électrique coupé du conducteur central; caractérisé en que :
l'unité de liaison comprend un premier élément de liaison (15) monté avec des extrémités respectives connectées à pivotement au levier de commande (5) et au bras de serrage (4) et un second élément de liaison (14) monté avec des extrémités respectives connectées à pivotement au premier élément de liaison (15) et au second coulisseau (6);
et en ce que les coulisseaux (6, 7) peuvent venir en prise mutuellement par des parties d'engagement (6a, 7a) situées à leurs parties arrière, respectivement, de sorte que, lorsqu'ils sont en prise, ils peuvent se rapprocher et s'éloigner l'une de l'autre, mais ne peuvent pas se déplacer l'une par rapport à l'autre dans la direction de coulissement.

2. Outil à dénuder les fils électriques selon la revendication 1, dans lequel le second coulisseau (6) est pourvu d'un butoir fixe ou mobile (10) destiné à venir en contact avec le bout d'un fil électrique inséré, déterminant ainsi la longueur du revêtement du fil électrique qui est enlevée.

3. Outil à dénuder les fils électriques selon la revendication 1 ou 2, dans lequel chacune des lames (8, 9) est pourvue d'une rangée d'encoches de tailles différentes.
